# EUROPEAN PATENT APPLICATION

(11) **EP 1 387 364 A1**
(43) Date of publication of application: **04.02.2004**
(21) Application number: 02017353.0
(22) Date of filing: 02.08.2002
(51) Int. Cl.: G21C 17/06

(54) **A system for distinctive extraction and transportation of nuclear fuel rods**

(71) Applicant: Tokyo Electric Power Co., Ltd., Tokyo 100-0011 (JP)
(72) Inventor: Anegawa, Takafumi, Tokyo 185-0023 (JP); Mizokami, Shinya, , Saiwa-ku Kaiwasaki, Kanagawa 212-0057 (JP)
(74) Representative: Rapp, Bertram, Dr.

(57) **Abstract**

A computerized system for extraction and transportation of MOX fuel rods distinctively from the other nuclear fuel rods, wherein each rod is assigned a virtual label or a tangible label to indicate it is a MOX nuclear fuel rod or it is a fuel rod other than a MOX fuel rod, the system being provided with means having a function to identify a rod is a MOX nuclear fuel rod or it is a fuel rod other than a MOX fuel rod, the function being realized by employing the virtual label or the tangible label, and the system being provided with a function to transport the MOX fuel rods respectively from the other fuel rods to different depots .

## Description

This invention relates to a system for distinctive extraction and transportation of spent nuclear fuel rods from a spent nuclear fuel assembly after the nuclear fuel is burnt. More specifically, this invention relates to a computerized system to extract and transport spent MOX nuclear fuel rods distinctively from the spent nuclear fuel rods other than MOX nuclear fuel rods out of a nuclear fuel assembly containing MOX nuclear fuel rods, UO₂ nuclear fuel rods and UO₂ nuclear fuel rods containing gadolinium (Hereinafter referred to as Gd nuclear fuel rods.), and transport the spent MOX nuclear fuel rods distinctively from the spent nuclear fuel rods other than the spent MOX nuclear fuel rods. Hereinafter spent nuclear fuel rods are sometimes referred to simply as nuclear fuel rods.

It is well-known that most of the presently working nuclear reactors are thermal neutron reactors employing fissionable uranium namely U²³⁵ as the nuclear fuel and light water as the moderator and coolant, which reactors are usually called light water reactors employing U²³⁵. It is also well-known that since the spent fuel of the light water reactors employing U²³⁵ contains a considerably large quantity of fissionable plutonium isotopes namely Pu²³⁹ and Pu²⁴¹, the spent fuel of the light water reactors employing U²³⁵ is employable as nuclear fuel. Thus, a thermal neutron light water reactor was newly developed employing the fissionable plutonium isotopes which are acquired by reprocessing the spent fuel of light water reactors employing U²³⁵. The nuclear fuel made of a mixture of oxides of plutonium isotopes and oxides of uranium is usually called MOX nuclear fuel standing for mixed oxide nuclear fuel.

For the newly developed thermal neutron light water reactor, MOX nuclear fuel is employed in the form of a MOX nuclear fuel rod which actually is a container in which column shaped ceramic MOX nuclear fuel pellets are confined. The function of a MOX nuclear fuel rod is to safely confine the fission products and the spent fuel therein.

In the case of the MOX employing thermal reactors, plural MOX nuclear fuel rods are assembled in a MOX nuclear fuel assembly, in which MOX nuclear fuel rods, UO₂ nuclear fuel rods and usually Gd nuclear fuel rods are arranged at cross points of checkers, remaining plural paths through which water is allowed to flow to act as a moderator and coolant. The function of a MOX nuclear fuel assembly is convenience for handling a large quantity of MOX nuclear fuel rods, likewise in the case of a UO₂ nuclear fuel assembly.

The MOX nuclear fuel assembly available in the prior art is a simple substitution of the current UO₂ nuclear fuel assembly realized by substituting relatively low enriched U²³⁵ fuel rods with relatively low enriched MOX fuel rods. In other words, it contains plural low enriched MOX fuel rods of which the enrichment grade is not a single grade, a large quantity of UO₂ nuclear fuel rods and a small quantity of Gd nuclear fuel rods.

The inventors of this invention discovered a natural rule that the spent fuel of MOX nuclear fuel has actually little value, when it is employed as nuclear fuel, although that of UO₂ nuclear fuel is considerably valuable, when it is employed as nuclear fuel. Based on this principle, they completed an invention directed to a MOX nuclear fuel assembly which is employable for a thermal neutron reactor which employs MOX nuclear fuel rods, UO₂ nuclear fuel rods and Gd nuclear fuel rods as the nuclear fuel and water as the moderator and coolant, of which the production cost is less expensive and the spent fuel thereof is valuable as nuclear fuel (Japanese Patent Application No. 2001-221708, US Serial No. 10/066,744 and EPC Application No. 02 003 507.7). The newly developed MOX nuclear fuel assembly is employable either for the presently working light water reactors which were inherently designed to employ U²³⁵ alone or for the reactors which will be designed to employ the foregoing MOX nuclear fuel assembly developed by the inventors of this invention.

Since the nuclear fuel assembly employable for a light water reactor employing U²³⁵ available in the prior art contains UO₂ fuel rods alone, there was no idea of any distinctive extraction of spent nuclear fuel rods, when the spent fuel thereof is reprocessed. Thus, when the spent fuel of light water reactors employing U²³⁵ is reprocessed, the spent nuclear fuel assemblies usually having a square cross section having each side of approximately 10 cm in length are chopped to make plural discs having a cross section having a diameter of approximately 10 mm, before melting them and chemically extracting plutonium isotopes.

The MOX nuclear fuel assembly developed by the inventors of this invention, however, contains a single kind of highly enriched MOX nuclear fuel rods of which the enrichment grade is a single grade, plural kinds of low enriched UO₂ fuel rods each of which has an enrichment grade different from one another and usually Gd nuclear fuel rods. In addition, one of the advantages of the nuclear fuel assembly developed by the inventors of this invention is possibility of employment of the spent fuel of UO₂ nuclear fuel rods contained in the MOX fuel assembly developed by them. In other words, the possibility of employment of the spent fuel of UO₂ nuclear fuel rods which is remarkably valuable, when it is employed as nuclear fuel. Thus, it is essential to extract the MOX spent fuel rods distinctively from the spent UO₂ fuel rods and the spent Gd nuclear fuel rods, when the spent fuel of the MOX nuclear fuel assembly developed by the inventors of this invention is reprocessed. Otherwise, it is impossible to realize the feature of the MOX nuclear fuel assembly developed by the inventors of this invention. Thus, required is development of a system for extraction and transportation of the spent MOX fuel rods distinctively from the spent UO₂ fuel rods and spent Gd fuel rods, if any, out of a nuclear fuel assembly.

The object of this invention is to satisfy the foregoing requirement and to provide a system for extraction and transportation of spent MOX fuel rods distinctively from the spent fuel rods other than MOX nuclear fuel rods out of a nuclear fuel assembly, more specifically, a computerized system to extract and transport the spent MOX fuel rods distinctively from the spent fuel rods other than MOX nuclear fuel rods, out of a nuclear fuel assembly containing MOX fuel rods, UO₂ fuel rods and usually Gd fuel rods and transport the spent MOX fuel rods distinctively from the spent fuel rods other than MOX nuclear fuel rods.

The philosophy specific to the system for extraction and transportation of spent MOX fuel rods distinctively from the spent fuel rods other than MOX nuclear fuel rods, out of a nuclear fuel assembly, in accordance with this invention will be summarized below.
1. Each fuel rod contained in a nuclear fuel assembly is assigned either a virtual label or a tangible label to indicate whether it is a MOX nuclear fuel rod or it is a fuel rod other than a MOX fuel rod. In other words, each fuel rod is labeled by means selected from a group including virtual means, electronic means, opto-electronic means, mechanical, structural or geometrical means, magnetic means, optical means (means distinguishable by color), electro-magnetic means (means distinguishable by a magnetic flux caused by an electro-magnetic phenomenon appearing between a MOX fuel rod or a fuel rod other than a MOX fuel rod and the hanging part of a distinction and transportation device) or the like.
2. The computerized system of this invention is provided with means to read the virtual label or the tangible labels and to distinguish whether a rod is a MOX nuclear fuel rod or a fuel rod other than a MOX fuel rod.
3. The function of the system of this invention is to distinguish MOX nuclear fuel rods from nuclear fuel rods other than MOX nuclear fuel rods. Since a Gd fuel rod contains several % of Gd, several % of low enriched U²³⁵ and a large quantity of U²³⁸, the nature of the spent fuel thereof is virtually identical to that of the UO₂ fuel rod. Thus, it is needless to distinguish spent Gd fuel rods from spent UO₂ fuel rods for the object of this invention. It is of course possible to distinguish three or more elements e.g. a MOX nuclear fuel rod, a nuclear fuel rod and a Gd nuclear fuel rod or the like.
4. Some of the fuel rod distinguishing means of this system for extraction and transportation of MOX fuel rods distinctively from the other fuel rods, of this invention are provided with a function to transport nuclear fuel rods, in addition to the function to identify the rod is a MOX fuel rod or the other fuel rod. Some of the systems for extraction and transportation of MOX fuel rods distinctively from the other fuel rod of this invention which are not provided with a function of transportation, are required to be provided with additional transportation means.

More specifically, the philosophy specific to the systems for extraction and transportation of MOX fuel rods distinctively from the other fuel rods, out of a nuclear fuel assembly, in accordance with some embodiments of this invention will be described below.
1. A virtual label to be assigned to each MOX nuclear fuel rod, each UO₂ nuclear fuel rod or each Gd nuclear fuel rod, in accordance with the first embodiment of this invention, could be a number, a symbol or the like. If required, it is of course allowed to assign a label to MOX fuel rods and the other label to all the other fuel rods including UO₂ nuclear fuel rods and Gd nuclear fuel rods, because it is unnecessary to separate UO₂ nuclear fuel rods from Gd nuclear fuel rods. The system for extraction and transportation of MOX nuclear fuel rods distinctively from the nuclear fuel rods other than MOX fuel rods in accordance with this embodiment, is provided with a memory for memorizing the foregoing virtual label e.g. an internal memory installed in the computer proper, a ROM, a CDROM, a DVD or the like and a computer program to read the virtual labels and to identify each rod is a MOX nuclear fuel rod or a fuel rod other than a MOX fuel rod for the purpose to issue a command to transport the MOX nuclear fuel rods and the other fuel rods toward storages different from each other and to conduct the command to transport the MOX nuclear fuel rods and the other fuel rods to the storages different from each other. If only two labels are assigned for identifying MOX fuel rods and the others, the system is considerably simplified.
2. The system in accordance with this embodiment is required to be further provided with a tangible apparatus to transport the MOX nuclear fuel rods and the other fuel rods respectively.
3. A mechanical, structural or geometrical label to be assigned to each MOX nuclear fuel rod or each of the other fuel rods including UO₂ nuclear fuel rods and Gd nuclear fuel rods, in accordance with the second embodiment of this invention, could be a combination of a mechanical structure or shape of means to hang or hold MOX fuel rods or the other fuel rods and a hanging part of means to distinguish and transport fuel rods. For example, a combination of the mechanical structure of the means to hang or hold the MOX fuel rods or the other fuel rods and the mechanical structure of the hanging part of the means to transport fuel rods could be a structure distinctively connective either to a MOX fuel rod or to the other fuel rods. In other words, identification of a nuclear fuel rod is conducted by difference in the way in which the means to hang or hold a fuel rod connects the hanging part of the means to distinguish and transport a nuclear fuel rod.
4. In most cases of this embodiment, the system has capability of transportation means.
5. An example of the mechanical, structural or geometrical label of this embodiment is a combination of (A) the structure of (1) the means to hang e.g. MOX fuel rods having a vertical longitudinal part having one vertical recess having a set of laterally extended recesses or (2) the means to hang e.g. nuclear fuel rods other than MOX fuel rods having a vertical longitudinal part having e.g. one vertical recess having plural sets of laterally extended recesses and (B) the structure of the hanging part of the means to distinguish and transport having a vertical longitudinal part having plural sets of laterally extendable/contractible projections which are connective (1) to the foregoing one set of laterally extended recesses of e.g. a MOX fuel rod or (2) to the foregoing plural sets of laterally extended recesses of e.g. the nuclear fuel rods other than MOX fuel rods. When the one extendable/contractible projection alone of the vertical longitudinal part of the distinction and transportation means can fully extend, the rod is identified as e.g. a MOX fuel rod and when the plural extendable/contractible projections of the vertical longitudinal part of the transportation means can fully extend, the rod is identified as e.g. a nuclear fuel rod other than a MOX fuel rod. The quantity of the lateral recesses can be reversed. In other words, the vertical longitudinal parts of the nuclear fuel rods other than MOX fuel rods can be given a set of laterally extended recesses and the vertical longitudinal parts of the MOX fuel rods can be given plural sets of laterally extended recesses.
6. Another example of the mechanical, structural or geometrical labels is a combination of the structure of the hanging part of the means to distinguish and transport having a vertical longitudinal part having e.g. a male screw of one direction and the hanging part of e.g. MOX fuel rods having a vertical longitudinal recess having e.g. a female screw of one direction or the hanging part of e.g. nuclear fuel rods other than MOX fuel rods having a vertical longitudinal recess having e.g. a screw of the other direction. When the two screws are successfully connected, the rod is identified as e.g. a MOX fuel rod and when the two screws are not successfully connected, the rod is identified as e.g. a fuel rod other than a MOX fuel rod. When the hanging part of the distinction and transportation means can be connected with the longitudinal part of the MOX fuel rods, it is needless to have transportation means for transporting the MOX fuel rods. As is in the case of the first example, the nature of the screws can be reversed.
7. A magnetic label (means to distinguish a nuclear fuel rod as a MOX fuel rod or a nuclear fuel rod other than a MOX fuel rod by employing magnetic attraction of a nuclear fuel rod) to be assigned to each MOX nuclear fuel rod or each fuel rod other than a MOX fuel rod, in accordance with the third embodiment of this invention, could be a combination of a nuclear fuel rod having a hanging part made of or attached by a piece of magnetic material e.g. steel, cobalt, nickel et al. or non-magnetic material e.g. aluminum et al. and distinction and transportation means having a vertical rod hanged by means to sense the downward strain e.g. a strain gauge and having a magnetic flux emitting part and distinction means (a regulator) made of an electronic system to conduct identification of a MOX fuel rod or a fuel rod other than a MOX fuel rod. Identification is conducted by possibility of connection between the means to hang a fuel rod and the hanging part of the means to distinguish and transport the fuel rod. In this case, a MOX fuel rod or a fuel rod other than a MOX fuel rod which connects the transportation means does not need any other transportation means.
8. An optical label (means to distinguish a nuclear fuel rod as a MOX fuel rod or a nuclear fuel rod other than a MOX fuel rod by employing the difference in color of the fuel rod) to be assigned to each MOX nuclear fuel rod and each fuel rod other than a MOX fuel rod, in accordance with the fourth embodiment of this invention, could be a combination of (A) a nuclear fuel rod having a hanging part having a colored piece or a nuclear fuel rod having a colored hanging part and (B) distinction and transportation means having two photo-sensitive elements e.g. two photo diodes et al. each of which is sensitive either to the color of the MOX fuel rod or to the color of the other fuel rod and an electronic system (a regulator) to identify the nuclear fuel rod is either a MOX fuel rod or a fuel rod other than a MOX fuel rod by identifying the photo-sensitive elements e.g. photo diode et al. which have actually worked. In this case, transportation means is required
9. An electro-magnetic label (means to distinguish a nuclear fuel rod is a MOX fuel rod or a nuclear fuel rod other than a MOX fuel rod by employing a magnetic flux caused by the electric current flowing in a closed coil provided in e.g. a hanging part for a MOX fuel rod or a nuclear fuel rod other than a MOX fuel rod due to electro-magnetic phenomenon which occurs between either a MOX fuel rod or a fuel rod other than a MOX fuel rod and the distinction and transportation means) to be assigned to each MOX nuclear fuel rod or each fuel rod other than a MOX fuel rod, in accordance with the fifth embodiment of this invention, could be a combination of (A) e.g. a MOX fuel rod having a hanging part having a first closed coil or a nuclear fuel rod other than a MOX fuel rod having a hanging part having no first closed coil and (B) distinction and transportation means having a magnetic flux emitting part for emitting the first magnetic flux and a magnetic flux sensor or a second closed coil which receives the second magnetic flux issued by the foregoing first closed coil and an electronic system (a regulator) to determine the nuclear fuel rod is a MOX fuel rod or a nuclear fuel rod other than a MOX fuel rod by sensing whether or not the second closed coil receives the second magnetic flux. Since the function of this system is limited to identification of fuel rods, the other transportation means is required.
10.Transportation means which is required to be provided independently from an identification system can be any un-attended system including a computerized vacuum chuck system or the like.

This invention, together with its various features and advantages, can be readily understood from the following more detailed description presented in conjunction with the following drawings, in which:

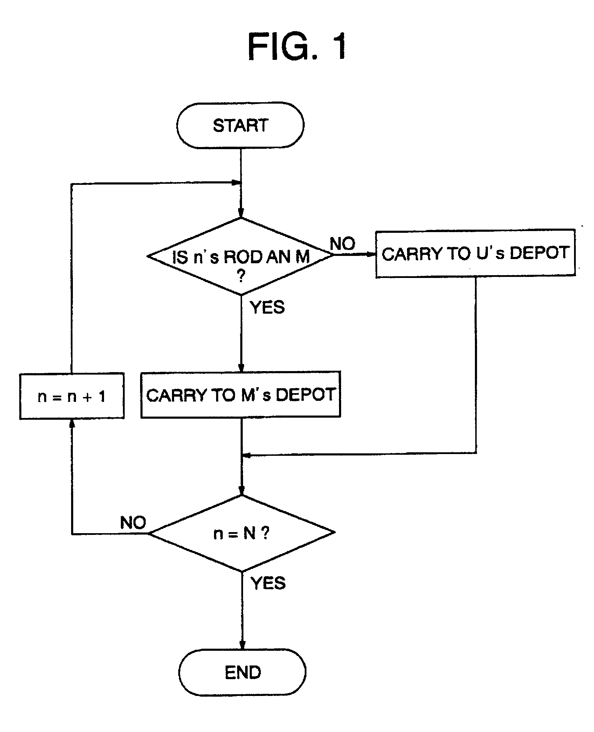

- Fig. 1: is a flow chart of a system for extraction and transportation of MOX nuclear fuel rods distinctively from nuclear fuel rods other than MOX fuel rods in accordance with the first embodiment of this invention,

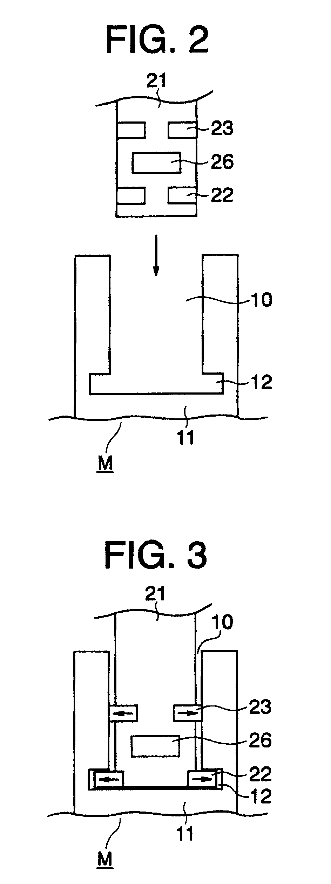

- Fig. 2: is a schematic drawing of a system for extraction and transportation of MOX nuclear fuel rods distinctively from nuclear fuel rods other than MOX fuel rods in accordance with the first example of the second embodiment of this invention (a position before means for distinction and transportation of nuclear fuel rods is inserted in the vertical recess of e.g. a MOX fuel rod),
- Fig.3: is a schematic drawing of a system for extraction and transportation of MOX nuclear fuel rods distinctively from nuclear fuel rods other than MOX fuel rods in accordance with the first example of the second embodiment of this invention (a connected position of a MOX fuel rod),

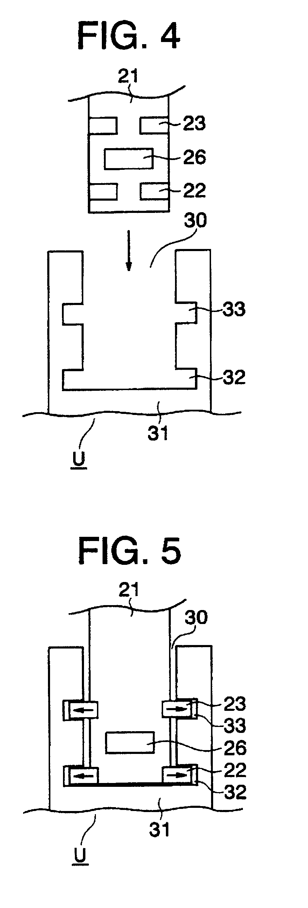

- Fig. 4: is a schematic drawing of a system for extraction and transportation of MOX nuclear fuel rods distinctively from nuclear fuel rods other than MOX fuel rods in accordance with the first example of the second embodiment of this invention (a position before means for distinction and transportation of nuclear fuel rods is inserted in the vertical recess of e.g. a nuclear fuel rod other than a MOX fuel rod),
- Fig. 5: is a schematic drawing of a system for extraction and transportation of MOX nuclear fuel rods distinctively from nuclear fuel rods other than MOX fuel rods in accordance with the first example of the second embodiment of this invention (a connected position of a nuclear fuel rod other than a MOX fuel rod),

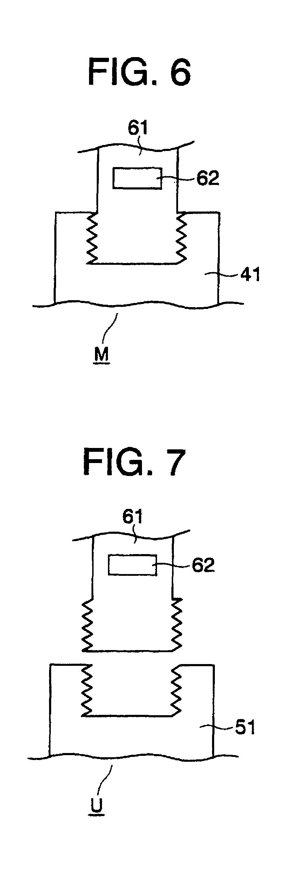

- Fig. 6: is a schematic drawing of a system for extraction and transportation of MOX nuclear fuel rods distinctively from nuclear fuel rods other than MOX fuel rods in accordance with the second example of the second embodiment of this invention (a connected position of a MOX fuel rod with distinctive extraction and transportation means ),
- Fig. 7: is a schematic drawing of a system for extraction and transportation of MOX nuclear fuel rods distinctively from nuclear fuel rods other than MOX fuel rods in accordance with the second example of the second embodiment of this invention (un-connected position of a fuel rod other than a MOX nuclear fuel rod with distinctive extraction and transportation means ),

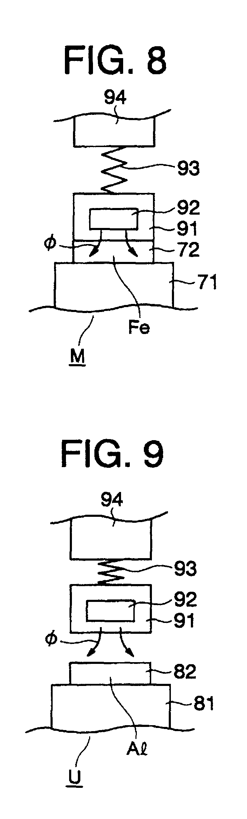

- Fig. 8: is a schematic drawing of a system for extraction and transportation of MOX nuclear fuel rods distinctively from nuclear fuel rods other than MOX fuel rods in accordance with the third embodiment of this invention (a connected position of a MOX fuel rod with distinctive extraction and transportation means ),
- Fig. 9: is a schematic drawing of a system for extraction and transportation of MOX nuclear fuel rods distinctively from nuclear fuel rods other than MOX fuel rods in accordance with the third embodiment of this invention (unconnected position of a fuel rod other than a MOX nuclear fuel rod with distinctive extraction and transportation means ),

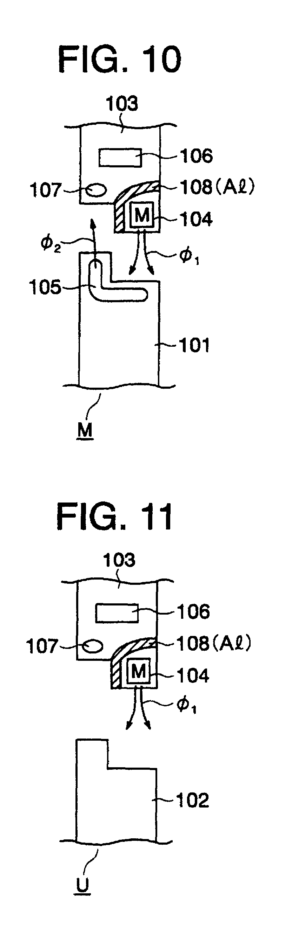

- Fig. 10: is a schematic drawing of a system for extraction and transportation of MOX nuclear fuel rods distinctively from nuclear fuel rods other than MOX fuel rods in accordance with the fifth embodiment of this invention (a connected position of a MOX fuel rod with distinctive extraction and transportation means ),
- Fig. 11: is a schematic drawing of a system for extraction and transportation of MOX nuclear fuel rods distinctively from nuclear fuel rods other than MOX fuel rods in accordance with the fifth embodiment of this invention (unconnected position of a fuel rod other than a MOX nuclear fuel rod with distinctive extraction and transportation means ),

A detailed description will be presented below for a computerized system to extract and transport spent MOX fuel rods distinctively from spent UO₂ fuel rods and spent Gd fuel rods, if any, out of a nuclear fuel assembly containing MOX fuel rods, UO₂ fuel rods and usually Gd fuel rods and transport the MOX fuel rods and the other fuel rods to different storages respectively in accordance with five independent embodiments of this invention.

### FIRST EMBODIMENT

A system employing a virtual label namely electronic label or opto-electronic label.

Each fuel rod is given its number e.g. l∼n. In addition, each of the MOX fuel rods, UO₂ fuel rods and Gd fuel rods is provided with a symbol e.g. M, U or G to indicate it is a MOX nuclear fuel rod, a UO₂ fuel rod or a Gd fuel rod, and the symbol e.g. M, U or G is memorized as a virtual form, electronically or opto-electronically in an internal memory installed in the computer proper, a ROM, a CDROM, a DVD or the like. As was described earlier, the labels can be limited to two including the one assigned to a MOX fuel rod and the other assigned to a fuel rod other than a MOX fuel rod.

Referring to Fig. 1 illustrating a flow chart of a computerized system to extract and transport spent MOX fuel rods distinctively from the spent fuel rods other than MOX fuel rods, out of a nuclear fuel assembly containing MOX fuel rods, UO₂ fuel rods and usually Gd fuel rods and transport the MOX fuel rods and the other fuel rods to storages different from each other in accordance with the first embodiment of this invention, each symbol e.g. M, U or G is read from a memory e.g. an internal memory installed in the computer proper, a ROM, a CDROM, a DVD or the like, in turn in the order of the number given to each fuel rod and is identified a rod is a MOX fuel rod, a UO₂ fuel rod or a Gd fuel rod by being compared with sample labels memorized in the computer.

The number of each fuel rod is accessed in turn to identify each rod is a MOX fuel rod or a UO₂ fuel rod, by reading the symbol assigned to each fuel rod from the foregoing memory. According to the results of the identification, distinction and transportation means outputs a command to transport the MOX fuel rod and the fuel rod other than MOX fuel rod respectively to respective storage, and conducts the command.

As was described earlier, the quantity of labels can be limited to two. In this case, the one is assigned to MOX fuel rods, and the other is assigned to the other fuel rods.

Since the function of this embodiment is limited to identification of a MOX fuel rod and a fuel rod other than a MOX fuel rod, a computerized crane is required to transport the MOX fuel rods and the other fuel rods to different storages respectively. This unattended crane can be an automated ordinary one which can lift up and down the fuel rods and travel and traverse to carry the fuel rods, and is installed at a spent fuel reprocessing plant. It is possible to use a vacuum chuck as well.

### SECOND EMBODIMENT

A system employing a mechanical label namely a label represented by the shape of the longitudinal hanging parts of fuel rods and of the hanging part of distinction and transportation means.

### FIRST EXAMPLE OF SECOND EMBODIMENT

Referring to Figs. 2 and 3 respectively illustrating the position before means for distinction and transportation of nuclear fuel rods is inserted in the vertical recess of e.g. a MOX fuel rod and the position wherein a combination of the female hanging part 11 (Herein after referred to as an eye part.) of a MOX nuclear fuel rod M and the male hanging part 21 (Herein after referred to as an hook part.) of the distinction and transportation means of a system for distinctive extraction and transportation of nuclear fuel rods from a nuclear fuel assembly in accordance with the first example of the second embodiment of this invention, the eye part 11 of each MOX nuclear fuel rod M has a vertical tube having a converse T shaped recess having a set of laterally extended recesses 12 at the bottom thereof. On the other hand, the hook part 21 of the distinction and transportation means is a vertical longitudinal rod having two sets of extendable and contractible lateral projections 22 and 23 (Fig. 2 shows a contracted position.) and having a regulator 26 having a function to lead the hook part 21 to the neighborhood of the eye part 11, to extend the lateral projections 22 and 23, to check whether one or two lateral projections 22 and 23 has or have fully extended and to identify the fuel rod is a MOX fuel rod M or a fuel rod other than a MOX fuel rod U. The two sets of extendable and contractible lateral projections 22 and 23 are kept contracted, while the hook part 21 of the distinction and transportation means does not finish insertion to the converse T shaped recess 10 of the eye part 11 of a MOX nuclear fuel rod M. When the hook part 21 of the distinction and transportation means finished insertion to the converse T shaped recess 10 of the eye parts 11 of a MOX nuclear fuel rod M, the two sets of extendable and contractible lateral projections 22 and 23 try to extend into the lateral recesses 12, as shown in Fig. 3. Since the recess 10 of the eye part 11 of a MOX nuclear fuel rod M has a converse T shape having a set of lateral recesses 12 only at the bottom thereof, however, the lateral projections 23 provided at the middle part of the hook part 21 can not finish extension. Identification of the fuel rod can be conducted by this insufficient extension of the lateral projections 23 provided at the middle part of the hook part 21. The lateral projections 22 provided at the bottom of the hook part 21 are, however, successfully connected with the lateral recesses 12 of the eye part 11 of a MOX nuclear fuel rod M. This connection is employable as transportation means as well for the MOX nuclear fuel M.

Referring to Figs. 4 and 5 respectively illustrating the position before means for distinction and transportation of nuclear fuel rods is inserted in the vertical recess of e.g. a nuclear fuel rod other than a MOX fuel rod and the position wherein a combination of the female hanging part 31 (Herein after referred to as an eye part.) of a nuclear fuel rod other than a MOX fuel rod U and the male hanging part 21 (Herein after referred to as an hook part) of the distinction and transportation means of a system for distinctive extraction and transportation of nuclear fuel rods from a nuclear fuel assembly in accordance with the first example of the second embodiment of this invention, the eye part 31 of each nuclear fuel rod other than a MOX fuel rod U is a vertical elongation having a vertical recess having two sets of lateral extensions 32 and 33 respectively at the middle part and the bottom part thereof. On the other hand, the hook part 21 of the distinction and transportation means is a vertical elongation having two sets of extendable and contractible lateral projections 22 and 23 (Fig. 4 shows a contracted position.). The two sets of extendable and contractible projections 22 and 23 are kept contracted, while the hook part 21 of the distinction and transportation means does not finish insertion into the vertical recess of the eye part 31 of a nuclear fuel rod other than a MOX fuel rod U. When the hook part 21 of the distinction and transportation means finished insertion into the vertical recess of the eye part 31 of a nuclear fuel rod other than a MOX fuel rod U, the two sets of extendable and contractible lateral projections 22 and 23 try to extend in the horizontal direction, as shown in Fig. 5. Since the eye part 31 of a nuclear fuel rod other than a MOX fuel rod U has a vertical recess having two sets of the lateral extensions 32 and 33 respectively at the middle part and the bottom part thereof, the lateral projections 22 and 23 of the eye part 31 can finish full extension. Identification of the fuel rods can be conducted by this successful extension of the lateral projections 22 and 23. The function of the regulator 26 is identical to that described earlier. It has a function to lead the hook part 21 to the neighborhood of the eye part 11, to extend the lateral projections 22 and 23, to check whether one or two sets of projections 22 and 23 has or have fully extended and to identify the fuel rod is a MOX fuel rod M or a fuel rod other than a MOX fuel rod U.

### SECOND EXAMPLE OF SECOND EMBODIMENT

Referring to Fig. 6 illustrating the connected position of a combination of the hanging part 41 of a vertical elongation having a right-handed or left-handed female or male screw of a MOX nuclear fuel rod M and the hanging part 61 of a vertical elongation having a right-handed or left-handed male or female screw of the distinction and transportation means of a system for distinctive extraction and transportation of nuclear fuel rods from a nuclear fuel assembly in accordance with the second example of the second embodiment of this invention, the hanging part 41 with a right-handed or left-handed female or male screw of a MOX nuclear fuel rod M and the hanging part 61 with a right-handed or left-handed male or female screw of the distinction and transportation means, makes a combination of connective screws. Thus, the hanging part 41 of a MOX nuclear fuel rod M and the hanging part 61 of the distinction and transportation means can be connected. By this successful connection, a regulator 62 having a function to lead the hook part 41 to the neighborhood of the eye part 41, to rotate the screw and to check whether the connection was successfully made or a scheduled time was expired before the connection was successfully made and to identify whether the fuel rod is a MOX fuel rod M or a fuel rod other than a MOX fuel rod U, works to identify the fuel rod is a MOX fuel rod M or not.

On the other hand, referring to Fig. 7 illustrating the un-connected position of a combination of a hanging part 51 of a vertical elongation having a left-handed or right-handed female or male screw of a nuclear fuel rod other than a MOX fuel rod U and the hanging part 61 of a vertical elongation having a right-handed or left-handed male or female screw of the distinction and transportation means, the hanging part 51 with a left-handed or right-handed female or male screw of a nuclear fuel rod other than a MOX fuel rod U and the hanging part 61 with a right-handed screw of the transportation means makes a combination of unconnective screws. Thus, the hanging part 51 of a nuclear fuel rod other than a MOX fuel rod U and the hanging part 61 of the transportation means cannot be connected. By this unsuccessful connection, the fuel rod id identified as a fuel rod other than a MOX fuel rod U. Since the distinction and transportation means can be connected with the MOX fuel rods M, it is needless to have another transportation means for transporting the MOX fuel rods M. In this case, it is required to provide another transportation means having a vertical hanging part with e.g. one right-handed screw for transporting fuel rods other than the MOX fuel rods U.

### THIRD EMBODIMENT

A system employing a magnetic label attached to the hanging parts of MOX fuel rods or fuel rods other than MOX fuel rods and the hanging part of a distinction and transportation device.

Referring to Fig. 8 illustrating the connected position of a MOX fuel rod M with distinctive extraction and transportation means, a combination of a hanging part 71 of a MOX nuclear fuel rod M attached by a plate 72 of or made of a magnetic material e.g. steel, cobalt or nickel and the hanging part 91 of the distinction and transportation means which is hanged by a device to sense the downward stress 93 e.g. a strain gauge or the like and has a magnetic flux emitting device made of an electric magnet or the like and a regulator 92 is employed.

It is clear that the hanging part 71 of a MOX nuclear fuel rod M and the hanging part 91 of the distinction and transportation means can be connected. When the hanging part 91 sticks to the magnetic plate 72 of the hanging part 71, the downward stress sensor 93 e.g. a strain gauge or the like works. By sensing the downward stress 93, the regulator 92 identifies the fuel rod is a MOX fuel rod M.

On the other hand, referring to Fig. 9 illustrating the unconnected position of a fuel rod other than a MOX fuel rod U with distinctive extraction and transportation means, the hanging part 81 of a nuclear fuel rod other than a MOX fuel rod U is attached by a plate 82 of or made of a non-magnetic material e.g. aluminum. The structure of the distinction and transportation device is identical to that described above for the MOX fuel rod M.

It is clear that the hanging part 81 of the nuclear fuel rod other than a MOX fuel rod U does not stick to the hanging part 91 of the distinction and transportation means. Thus, the downward stress sensor 93 e.g. a strain gauge or the like does not work. By sensing the non-operation of the downward stress sensor 93, the regulator 92 identifies the fuel rod is a fuel rod other than a MOX fuel rod U.

In this embodiment, any selection of a part attached by a magnetic plate or made of a magnetic material is freely allowed. Further, another transportation means is required for the combination of the non-magnetic hanging part and the distinction and transportation device. The transportation means can be an unattended computerized ordinary crane. It is possible to use a vacuum chuck as well.

### FOURTH EMBODIMENT

A system employing a combination of hanging parts of fuel rods attached by an optical label or a colored label and a distinction device provided with a couple of photo-sensors e.g. photodiodes or the like each of which is sensitive to the color of each optical label or a colored label attached to the hanging parts of fuel rods and a regulator identifying the working photo-sensor to distinguish a fuel is a MOX fuel rod or a fuel rod other than a MOX fuel rod.

An optical label or a colored label is attached to each MOX nuclear fuel rod M and the other optical label or a colored label is attached to each fuel rod other than a MOX fuel rod U and a system to sense the color of the optical labels is provided to the fuel rod distinction means. The system includes a couple of photo-sensors e.g. photodiodes or the like each of which is sensitive to each corresponding color of the optical labels of or attached to each of the hanging part of a fuel rod and a regulator which receives a signal from the photo-sensors and identifies a fuel rod is a MOX fuel rod M or a fuel rod other than a MOX fuel rod U by identifying the photo-sensor actually working.

The system requires a transportation device and the transportation device can be an unattended computerized ordinary crane. It is possible to use a vacuum chuck as well.

### FIFTH EMBODIMENT

A system employing a combination of fuel rods each of which has a first closed coil or has no closed coil and a distinction and transportation device having a magnetic flux emitting device, a second closed coil for receiving the secondary magnetic flux emitted by the first closed coil and a regulator.

Referring to Fig. 10, the hanging part 101 of a MOX nuclear fuel rod M has a first closed coil 105 and the hanging part 103 of a distinction and transportation device has a magnetic flux emitting device 104 e.g. an electric magnet which emits a magnetic flux ϕ toward the foregoing first closed coil 105 provided to the hanging part 101 of a MOX nuclear fuel rod M, a second closed coil 107 and a regulator 106. When the hanging part 103 approaches the hanging part 101 of a MOX fuel rod M, the regulator 106 causes the magnetic flux emitting device 104 to emit a magnetic flux ϕ towards the first closed coil 105 to cause it to emit the secondary fluxϕ₂ toward the second closed coil 107 to cause an electric current to flow therein and to cause another magnetic flux to occur nearby. The regulator 106 senses the another magnetic flux occurring nearby and identifies the fuel rod is a MOX fuel rod M.

Referring to Fig. 11, the hanging part 102 of a fuel rod other than a MOX nuclear fuel rod U has no closed coil therein. The structure of the hanging part 103 of a distinction and transportation device is entirely identical to that described above for the MOX nuclear fuel rod M. When the hanging part 103 approaches the hanging part 103 of a fuel rod other than a MOX fuel rod U, the regulator 106 causes the magnetic flux emitting device 104 to emit a magnetic flux (ϕ toward the hanging part 102 of a fuel rod other than a MOX nuclear fuel rod U. Since the hanging part 102 of a fuel rod other than a MOX nuclear fuel rod U has no closed coil, however, no electric current is caused to flow. As a result, no secondary fluxϕ₂ is caused to occur in the hanging part 102 of a fuel rod other than a MOX nuclear fuel rod U. Thus, the regulator 106 senses no magnetic flux. As a result, expiration of some predetermined length of time after it emits a command to work the magnetic flux emitting device 104 causes the regulator 106 to identify the fuel rod is a fuel rod other than a MOX fuel rod U.

Since the function of this embodiment is limited to identification of a MOX fuel rod M or a fuel rod other than a MOX fuel rod U, a computerized crane is required particularly to transport the fuel rods other than MOX fuel rods U. The transportation means can be an unattended computerized ordinary crane. It is possible to use a vacuum chuck as well.

In conclusion, the system for extraction and transportation of MOX fuel rods distinctively from the other fuel rods out of a nuclear fuel assembly in accordance with this invention is based on a philosophy that:
1. A MOX nuclear fuel rod M and the other nuclear fuel rods U are respectively assigned a virtual label or a tangible label selected from a group including a virtual label, an electronic label, an opto-electronic label, a mechanical or structural label, a magnetic label, an optical label, an electro-magnetic label or the like. Thus, it is possible to identify each rod is whether a MOX nuclear fuel rod M or a nuclear fuel rod other than a MOX fuel rod U.
2. The system is provided with computerized means to read the foregoing labels and to identify each rod is whether a MOX nuclear fuel rod M or a nuclear fuel rod other than a MOX fuel rod U.
3. The system is further provided with computerized transportation means to transport MOX nuclear fuel rods M and the other fuel rods U respectively to respective different storages. As a result, the object of this invention is successfully satisfied by this invention.

The above description has clarified that this invention has successfully provided a computerized system to extract and transport MOX fuel rods M distinctively from the fuel rods other than MOX fuel rods U out of a nuclear fuel assembly containing MOX fuel rods, UO₂ fuel rods and usually Gd fuel rods and transport them respective different storages respectively.

## Claims

1. A computerized system to extract and transport MOX fuel rods distinctively from nuclear fuel rods other than MOX fuel rods and transport them to respective different storage respectively comprising:
memory means memorizing a label assigned to each MOX nuclear fuel rod and a label assigned to each nuclear fuel rod other than a MOX nuclear fuel rod, means to identify whether a fuel rod is a MOX nuclear fuel rod or a nuclear fuel rod other than a MOX nuclear fuel rod by employing said labels, means to transport said identified MOX fuel rods and said identified other fuel rods respectively to a MOX fuel rod storage or the other fuel rod storage.

2. A computerized system to extract and transport MOX fuel rods distinctively from nuclear fuel rods other than MOX fuel rods out of a nuclear fuel assembly and transport them to respective different storage respectively comprising:
memory means memorizing a virtual label assigned to each MOX nuclear fuel rod and a virtual label assigned to each nuclear fuel rod other than a MOX nuclear fuel rod, means to read said virtual label assigned to a MOX nuclear fuel rod and said virtual label assigned to a nuclear fuel rod other than a MOX nuclear fuel rod and identify whether a fuel rod is a MOX nuclear fuel rod or a nuclear fuel rod other than a MOX nuclear fuel rod by sensing said label and by comparing said sensed label with the corresponding labels memorized in said memory, and means to transport said identified MOX fuel rods and said identified other fuel rods respectively to a MOX fuel rod storage and the other fuel rod storage.

3. A computerized system to extract and transport MOX fuel rods distinctively from nuclear fuel rods other than MOX fuel rods out of a nuclear fuel assembly and transport them respective different storage respectively comprising:
a plurality of hanging means of a MOX fuel rod, said hanging means having a mechanical shape specific to a MOX fuel rod, a plurality of hanging means of a fuel rod other than a MOX fuel rod, said hanging means having a mechanical shape specific to a fuel rod other than a MOX fuel rod, means having a nuclear fuel rod hanging part having a mechanical shape selectively connective to a MOX fuel rod or a fuel rod other than a MOX fuel rod, computerized means to identify a fuel rod is a MOX fuel rod or the other fuel rods, said identification is conducted by sensing the manner of connection between said mechanical shapes of said MOX fuel rod and of said fuel rod other than a MOX fuel rod, said computerized means issuing a command to transport them respective different storage respectively and conducting said command.

4. A computerized system to extract and transport MOX fuel rods distinctively from nuclear fuel rods other than MOX fuel rods out of a nuclear fuel assembly and transport them respective different storage respectively in accordance with claim 3 wherein:
said mechanical shape specific to a hanging part of said distinction and transportation means is a vertical elongation having plural sets of extendable and contractible lateral projections, said mechanical shape specific to hanging means of a MOX fuel rod or of a fuel rod other than a MOX fuel rod is a vertical elongation having a converse T shaped vertical recess having a set of laterally extended recesses, and said mechanical shape specific to hanging means of a nuclear fuel rod other than a MOX fuel rod or of a MOX fuel rod is a vertical elongation having a converse T shaped vertical recess having plural sets of laterally extended recesses.

5. A computerized system to extract and transport MOX fuel rods distinctively from nuclear fuel rods other than MOX fuel rods out of a nuclear fuel assembly and transport them respective different storage respectively in accordance with claim 3 wherein:
said mechanical shape specific to a hanging part of said distinction and transportation means is a vertical elongation having a one way-handed male or female screw, said mechanical shape specific to hanging means of a MOX fuel rod or of a fuel rod other than a MOX fuel rod is a vertical elongation having a one way-handed female or male screw, and said mechanical shape specific to hanging means of a nuclear fuel rod other than a MOX fuel rod or of a MOX fuel rod is a vertical elongation having the other way-handed screw

6. A computerized system to extract and transport MOX fuel rods distinctively from nuclear fuel rods other than MOX fuel rods out of a nuclear fuel assembly and transport them respective different storage respectively comprising:
a plurality of hanging means of a MOX fuel rod or a nuclear fuel rod other than a MOX fuel rod made of a magnetic or non-magnetic material or attached by a magnetic or non-magnetic member, a plurality of hanging means of a nuclear fuel rod other than a MOX fuel rod or a MOX fuel rod made of a non-magnetic or magnetic material or attached by a non-magnetic member, and distinction and transportation means having a nuclear fuel rod hanging part having magnetic flux emitting means and hanged by means to sense a downward tension and having a regulator having a function to identify a rod is a MOX fuel rod or a fuel rod other than a MOX fuel rod, said function being realized by operation of said means to sense a downward tension or non- operation of said means to sense a downward tension even after a predetermined length of time.

7. A computerized system to extract and transport MOX fuel rods distinctively from nuclear fuel rods other than a MOX fuel rod out of a nuclear fuel assembly and transport them respective different storage respectively comprising:
a plurality of MOX fuel rod hanging means made of a member of a first color or attached by a member of said first color, a plurality of hanging means of a fuel rod other than a MOX fuel rod made of a member of a second color or attached by a member of said second color, computerized means to sense said first color or said second color, to identify a fuel rod is a MOX fuel rod having said first color or a fuel rod other than a MOX fuel rod having said second color and to issue a command to transport a MOX fuel rod and a fuel rod other than a MOX fuel rod to different storages, and transportation means having a nuclear fuel rod hanging part and having a function to conduct said command to transport a MOX fuel rod and a fuel rod other than a MOX fuel rod to different storage.

8. A computerized system to extract and transport MOX fuel rods distinctively from nuclear fuel rods other than MOX fuel rods out of a nuclear fuel assembly and transport them respective different storage respectively comprising:
a plurality of MOX fuel rod hanging means, each of said plurality having a first closed coil to issue a secondary magnetic flux or having no closed coil, a plurality of hanging means for a nuclear fuel rod other than a MOX fuel rod, each of said plurality having no closed coil or having a first closed coil to issue a secondary magnetic flux, computerized means to identify a fuel rod is a MOX fuel rod or a fuel rod other than a MOX fuel rod and to transport said MOX fuel rod and said nuclear fuel rod other than a MOX fuel rod to respective different storage respectively, said computerized means having a vertical elongation having a first magnetic flux emitting means, a second closed coil to receive said secondary magnetic flux issued by said first closed coil, a regulator having a function to identify a fuel rod is a MOX fuel rod or a fuel rod other than a MOX fuel rod, said function being realized by sensing said secondary magnetic flux and transportation means to transport said identified MOX fuel rod and said identified nuclear fuel rod other than a MOX fuel rod to respective different storage respectively.
